# FASCICULE DE BREVET EUROPEEN

(11) **EP 4 159 420 B1**
(45) Date de publication et mention de la délivrance du brevet: **03.06.2026**
(21) Numéro de dépôt: 22196797.9
(22) Date de dépôt: 21.09.2022
(51) Int. Cl.: B29C 70/44, F01D 25/00, F01D 25/24, F02K 1/66, F02K 1/68, B29C 70/16, F02K 1/70, B29C 45/14, B29C 65/70, B29D 24/00, B29D 99/00, F02K 1/62, B29K 101/12

(54) **PROCÉDÉ DE FABRICATION D'UNE PORTE D'UN SYSTÈME D'INVERSION DE POUSSÉE, PORTE DE SYSTÈME D'INVERSION DE POUSSÉE AINSI OBTENUE ET ENSEMBLE DE PROPULSION D' AÉRONEF COMPRENANT PLUSIEURS DESDITES PORTES**
VERFAHREN ZUR HERSTELLUNG EINER TÜR EINES SCHUBUMKEHRSYSTEMS, SO ERHALTENE SCHUBUMKEHRSYSTEMTÜR UND FLUGZEUGANTRIEBSANORDNUNG MIT MEHREREN SOLCHEN TÜREN
METHOD FOR PRODUCING A DOOR OF A THRUST REVERSER SYSTEM, RESULTING THRUST REVERSER SYSTEM DOOR AND AIRCRAFT PROPULSION ASSEMBLY COMPRISING SEVERAL SUCH DOORS

(30) Priorité: 29.09.2021 FR 2110267
(43) Date de publication de la demande: 05.04.2023
(73) Titulaire: AIRBUS OPERATIONS (S.A.S.), 31060 Toulouse (FR)
(72) Inventeur: BROCHARD, Wolfgang, 31060 TOULOUSE (FR); CAZEAUX, Laurent, 31060 TOULOUSE (FR); RAVISE, Florian, 31060 TOULOUSE (FR)
(74) Mandataire: Fantin, Laurent

(56) Documents cités:
- EP-A1- 3 626 958
- EP-A1- 3 858 584
- WO-A1-2017/182565
- WO-A1-2019/030454

## Description

La présente demande se rapporte à un procédé de fabrication d'une porte d'un système d'inversion de poussée et à une porte de système d'inversion de poussée ainsi obtenue. Elle se rapporte également à un ensemble de propulsion d'aéronef comprenant un système d'inversion de poussée comprenant plusieurs desdites portes.

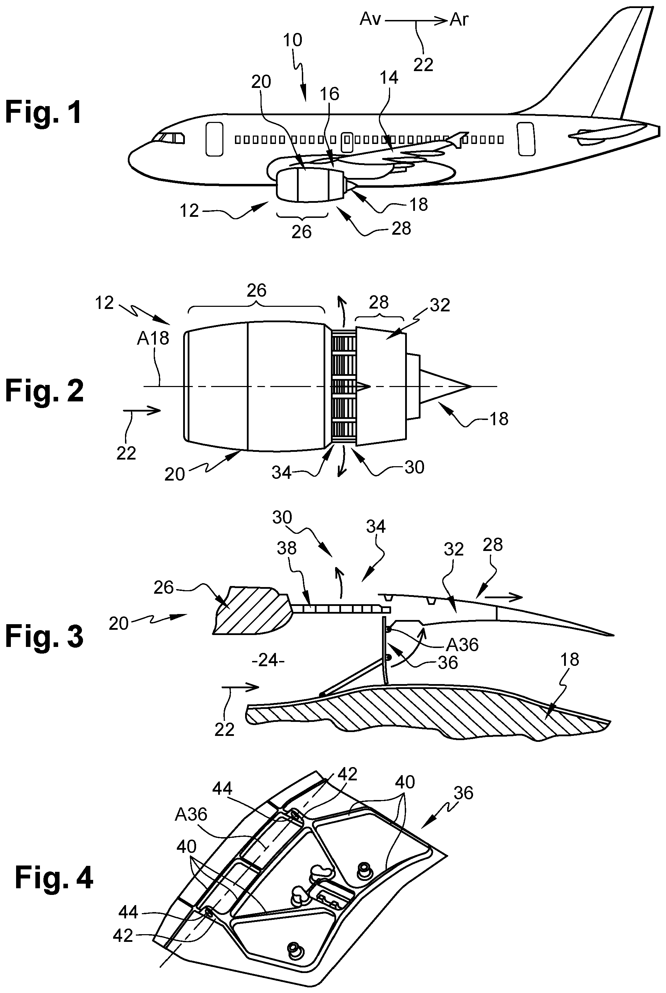

Selon un mode de réalisation visible sur les figures 1 à 4, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend un turboréacteur 18 positionné à l'intérieur d'une nacelle 20.

Pour la suite de la description, une direction longitudinale est parallèle à l'axe de rotation A18 du turboréacteur 18 et une direction radiale est perpendiculaire à l'axe de rotation A18. Un plan transversal est un plan perpendiculaire à l'axe de rotation A18. Les notions avant/arrière, notées Av/Ar, font référence au sens d'écoulement d'un flux d'air 22 dans la nacelle 20, ce dernier, représenté sur la figure 1 par une flèche, s'écoulant de l'avant (Av) vers l'arrière (Ar). La nacelle 20 a une forme approximativement tubulaire et délimite avec le turboréacteur 18 un conduit annulaire 24. Elle comprend, de l'avant vers l'arrière, une section avant 26 via laquelle pénètre le flux d'air 22 et une section arrière 28 via laquelle sort le flux d'air 22.

La nacelle 20 comprend un système d'inversion de poussée 30 configuré pour occuper un état activé (visible sur les figures 2 et 3) dans lequel il dévie au moins une partie du flux d'air 22 circulant dans le conduit annulaire 24 vers l'extérieur et l'avant de la nacelle 20 ainsi qu'un état inactivé (visible sur la figure 1) dans lequel il ne dévie pas le flux d'air 22 circulant dans le conduit annulaire 24.

Le système d'inversion de poussée 30 comprend au moins une partie mobile 32 permettant de générer au moins une ouverture latérale 34 (visible sur les figures 2 et 3) vers laquelle est orienté le flux d'air dévié.

Selon un mode de réalisation, la partie mobile 32 correspond à la section arrière 28 qui se translate selon la direction longitudinale entre une position fermée dans laquelle la section arrière 28 est en contact avec la section avant 26 lorsque le système d'inversion de poussée 30 est à l'état inactivé et une position ouverte (visible sur les figures 2 et 3) dans laquelle la section arrière 28 est écartée de la section avant 26 de manière à générer la (ou les) ouverture(s) latérale(s) 34 lorsque le système d'inversion de poussée 30 est à l'état activé.

Le système d'inversion de poussée 30 comprend également des portes 36 configurées pour dévier au moins une partie du flux d'air 22 circulant dans le conduit annulaire 24 en direction d'une ouverture latérale 34 ainsi qu'une pluralité de cascades 38 positionnées au niveau de l'ouverture latérale 34. Ces cascades 38 sont configurées pour contrôler l'orientation du flux dévié par les portes 36.

Chaque porte 36 est mobile entre une position rabattue lorsque le système d'inversion de poussée 30 est à l'état inactivé et que la partie mobile 32 est en position fermée, dans laquelle la porte 36 est plaquée contre la partie mobile 32, ainsi qu'une position déployée, visible sur la figure 3, lorsque le système d'inversion de poussée 30 est à l'état activé et que la partie mobile 32 est en position ouverte, dans laquelle la porte 36 s'étend en travers du conduit annulaire 24 pour dévier au moins une partie du flux d'air 22 y circulant en direction de l'ouverture latérale 34.

Selon une configuration, chaque porte 36 est montée pivotante autour d'un axe de rotation A36 sensiblement perpendiculaire à l'axe de rotation A18 et à une direction radiale.

Selon un premier mode de réalisation visible sur la figure 4, la porte 36 est métallique et présente une plaque renforcée sur l'une de ses faces par un réseau de nervures 40. Ce dernier intègre deux pattes de liaison 42 qui présentent chacune un orifice 44 configuré pour loger l'axe de rotation A36 de la porte 36. Cette porte 36 est réalisée à partir d'une plaque dans laquelle sont usinés le réseau de nervures 40 et les pattes de liaison 42.

Ce premier mode de réalisation n'est pas satisfaisant car la réalisation du réseau de nervures 40 et des pattes de liaison 42 génère un volume important de copeaux.

Le document EP3626958 A1 décrit un procédé de fabrication d'une porte d'un système d'inversion de poussée d'un aéronef qui comprend des première et deuxième parois en matériau composite ainsi qu'une structure alvéolaire intercalée entre les première et deuxième parois. Selon un mode de réalisation, la structure alvéolaire ainsi que les première et deuxième parois sont obtenues par moulage d'un matériau thermoplastique. Ce mode de réalisation est relativement complexe.

La présente invention vise à remédier à tout ou partie des inconvénients de l'art antérieur. A cet effet, l'invention a pour objet un procédé de fabrication d'une porte d'un système d'inversion de poussée d'un aéronef, ladite porte comprenant :
- au moins une première paroi comportant une première face configurée pour être en contact avec un flux d'air à dévier et une deuxième face,
- un réseau de nervures positionné sur la deuxième face de la première paroi, **le réseau de nervures comportant une première face en contact avec la première paroi, une deuxième face opposée à la première face ainsi que des cellules délimitées par les nervures du réseau de nervures et débouchant au niveau des première et deuxième faces.**

Selon l'invention, le procédé de fabrication comprend une étape d'obtention de la première paroi réalisée en au moins un matériau composite comportant des fibres longues noyées dans une matrice de résine thermoplastique et une étape de surmoulage du réseau de nervures sur la deuxième face de la première paroi en injectant au moins une résine.

En complément, lors de l'étape de surmoulage, la première paroi est positionnée dans un moule comportant une première surface de contact contre laquelle est plaquée la première face de la première paroi ainsi qu'une deuxième surface de contact espacée de la deuxième face de la première paroi et conformée comme la deuxième face du réseau de nervures à obtenir, le moule comportant, pour chaque cellule, une empreinte en saillie par rapport à la deuxième surface de contact et configurée pour venir en contact avec la première paroi lors de l'injection de résine.

**Ce procédé de fabrication permet de réaliser des portes d'un système d'inversion de poussée de manière simple et économique tout en limitant les déchets.**

Selon une autre caractéristique, la première paroi et/ou le moule sont préchauffés ou chauffés pour favoriser l'injection de résine entre les empreintes et l'adhérence du réseau de nervures sur la première paroi.

Selon une autre caractéristique, le procédé de fabrication comprend une étape de mise en place d'au moins un insert dans le moule préalablement à l'étape de surmoulage, le moule étant configuré pour maintenir immobile(s) le (ou les) insert(s).

Selon une autre caractéristique, le procédé de fabrication comprend une étape de thermoformage de la première paroi avant l'étape de surmoulage.

Selon une autre caractéristique, le procédé de fabrication comprend une étape de réalisation d'au moins un orifice traversant la première paroi préalablement à l'étape de surmoulage. Selon une autre caractéristique, le procédé de fabrication comprend une étape d'obtention d'une deuxième paroi puis une étape de fixation de la deuxième paroi contre le réseau de nervures et éventuellement la première paroi.

Selon une autre caractéristique, la deuxième paroi est en matériau composite comportant des fibres longues noyées dans une matrice de résine thermoplastique. En complément, lors de l'étape de fixation de la deuxième paroi, au moins la deuxième paroi et le réseau de nervures sont chauffés et la deuxième paroi est plaquée contre au moins le réseau de nervures. Selon une autre caractéristique, la résine du réseau de nervures est une résine thermoplastique et comprend au moins une charge.

Selon une autre caractéristique, le réseau de nervures dégageant une partie de la deuxième face de la première paroi, le procédé comprend une étape de découpe d'une zone de la première paroi non recouverte par le réseau de nervures en fonction d'une longueur souhaitée pour la porte.

L'invention a également pour objet une porte de système d'inversion de poussée obtenue à partir du procédé de fabrication selon l'une des caractéristiques précédentes.

Selon une autre caractéristique, la porte comprend au moins un orifice traversant qui présente un axe sensiblement perpendiculaire à au moins une des première et deuxième faces de la porte.

Selon une autre caractéristique, le réseau de nervures dégage une partie de la deuxième face de la première paroi située au niveau d'une deuxième extrémité distante de l'orifice traversant.

Selon une autre caractéristique, le réseau de nervures présente une épaisseur constante sur une zone au niveau de laquelle est situé l'orifice traversant puis une épaisseur qui diminue progressivement en s'éloignant de l'orifice traversant.

Selon une autre caractéristique, la porte comprend au moins un insert métallique tubulaire délimitant l'orifice traversant.

Selon une autre caractéristique, la porte comprend des première et deuxième parois. Le réseau de nervures comprend une première face en contact avec la première paroi, une deuxième face opposée à la première face et en contact avec la deuxième paroi ainsi que des cellules délimitées par les nervures du réseau de nervures et débouchant au niveau des première et deuxième faces. En complément, la première paroi est poreuse et laisse passer au moins certaines ondes acoustiques, la deuxième paroi est imperméable aux ondes acoustiques et les cellules du réseau de nervures sont dimensionnées en fonction des propriétés acoustiques recherchées.

Enfin, l'invention a également pour objet un ensemble de propulsion acoustique comprenant au moins un système d'inversion de poussée comportant plusieurs portes selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble de propulsion équipé d'un système d'inversion de poussée illustrant un mode de réalisation de l'art antérieur,
- La figure 3 est une coupe longitudinale d'une partie d'un ensemble de propulsion équipé d'un système d'inversion de poussée illustrant un mode de réalisation de l'art antérieur,
- La figure 4 est une vue en perspective d'une porte d'un système d'inversion de poussée illustrant un mode de réalisation de l'art antérieur,
- La figure 5 est une vue en perspective d'une partie d'un ensemble de propulsion d'un aéronef équipé d'un système d'inversion de poussée illustrant un mode de réalisation de l'invention,
- La figure 6 est une coupe longitudinale d'une partie d'un ensemble de propulsion équipé d'un système d'inversion de poussée illustrant un mode de réalisation de l'invention,
- La figure 7 est une vue en perspective selon un premier angle de vue d'une porte d'un système d'inversion de poussée illustrant un premier mode de réalisation de l'invention,
- La figure 8 est une vue en perspective selon un deuxième angle de vue de la porte visible sur la figure 7,
- La figure 9 est une vue latérale de la porte visible sur la figure 7,
- La figure 10 est une vue de dessus de plusieurs réseaux de nervures illustrant différents modes de réalisation de l'invention,
- La figure 11 est une vue en perspective des différentes parties d'une porte illustrant le premier mode de réalisation,
- La figure 12 est une coupe d'une moule pour réaliser une étape de surmoulage d'un réseau de nervures illustrant un mode de réalisation de l'invention, avant l'injection de résine,
- La figure 13 est une coupe du moule visible sur la figure 12 lors d'une étape de démoulage,
- La figure 14 est une vue en perspective d'une porte d'un système d'inversion de poussée illustrant un deuxième mode de réalisation de l'invention,
- La figure 15 est une vue en perspective des différentes parties d'une porte illustrant le deuxième mode de réalisation.

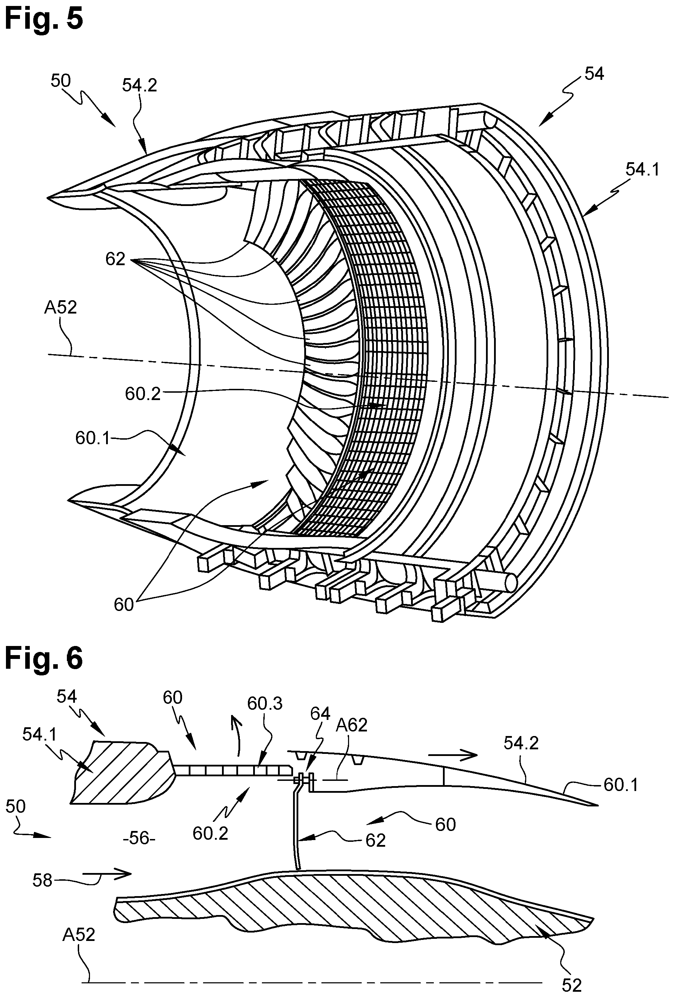

Selon un mode de réalisation visible sur les figures 5 et 6, un ensemble de propulsion 50 d'un aéronef comprend un turboréacteur 52 positionné à l'intérieur d'une nacelle 54. Le turboréacteur 52 présente un axe de rotation A52. La nacelle 54 a une forme approximativement tubulaire et délimite avec le turboréacteur 52 un conduit annulaire 56. La nacelle 54 comprend une partie avant 54.1 via laquelle pénètre un flux d'air 58 circulant dans le conduit annulaire 56 et une partie arrière 54.2 via laquelle sort le flux d'air 58.

Cet ensemble de propulsion 50 comprend au moins un système d'inversion de poussée 60 configuré pour occuper un état activé (visible sur les figures 5 et 6) dans lequel il dévie au moins une partie du flux d'air 58 circulant dans le conduit annulaire 56 vers l'extérieur et l'avant de la nacelle 54 ainsi qu'un état inactivé dans lequel il ne dévie pas le flux d'air 58 circulant dans le conduit annulaire 56.

Le système d'inversion de poussée 60 comprend au moins une partie mobile 60.1 permettant de générer au moins une ouverture latérale 60.2 vers laquelle est orienté le flux d'air dévié.

Selon un mode de réalisation, la partie mobile 60.1 correspond à la partie arrière 54.2 de la nacelle 54 qui se translate selon la direction longitudinale entre une position fermée dans laquelle la partie arrière 54.2 est en contact avec la partie avant 54.1 lorsque le système d'inversion de poussée 60 est à l'état inactivé et une position ouverte dans laquelle la partie arrière 54.2 est écartée de la partie avant 54.1 de manière à générer la (ou les) ouverture(s) latérale(s) 60.2 lorsque le système d'inversion de poussée 60 est à l'état activé.

Le système d'inversion de poussée 60 peut comprendre au moins une cascade 60.3 positionnée au niveau de l'ouverture latérale 60.2 et configurée pour contrôler l'orientation du flux d'air dévié.

Bien entendu, l'invention n'est pas limitée à ce mode de réalisation pour la partie mobile 60.1, l'ouverture 60.2 et la cascade 60.3 du système d'inversion de poussée 60. Ces éléments ne sont pas plus décrits car ils peuvent être identiques à ceux de l'art antérieur.

Le système d'inversion de poussée 60 comprend également plusieurs portes 62 configurées pour occuper un état déployé (visible sur les figures 5 et 6) dans lequel elles sont en saillie dans le conduit annulaire 56 et dévient au moins une partie du flux d'air 58 circulant dans le conduit annulaire 56 en direction d'une ouverture latérale 60.2 et un état rabattu dans lequel elles ne sont pas en saillie dans le conduit annulaire 56 et ne dévient pas le flux d'air 58. Chaque porte 62 est reliée à un support parmi le turboréacteur 52 et la nacelle 54 par une articulation 64 présentant un axe de pivotement A62. Toutes les portes 62 peuvent être reliées au même support, par exemple la nacelle 54, ou certaines portes 62 peuvent être reliées au turboréacteur 52 et d'autres à la nacelle 54.

Selon une particularité de l'invention, l'axe de pivotement A62 est sensiblement parallèle à l'axe de rotation A52 du turboréacteur 52. Ainsi, chaque porte 62 peut pivoter dans un plan approximativement transversal (perpendiculaire à l'axe de rotation A52 du turboréacteur 52) entre les états déployé et rabattu.

Chaque porte 62 présente une première face F1 destinée à être orientée vers l'avant de la nacelle 54 lorsque la porte 62 est à l'état déployé ainsi qu'une deuxième face F2 opposée à la première face F1 et destinée à être orientée vers l'arrière de la nacelle 54 lorsque la porte 62 est à l'état déployé.

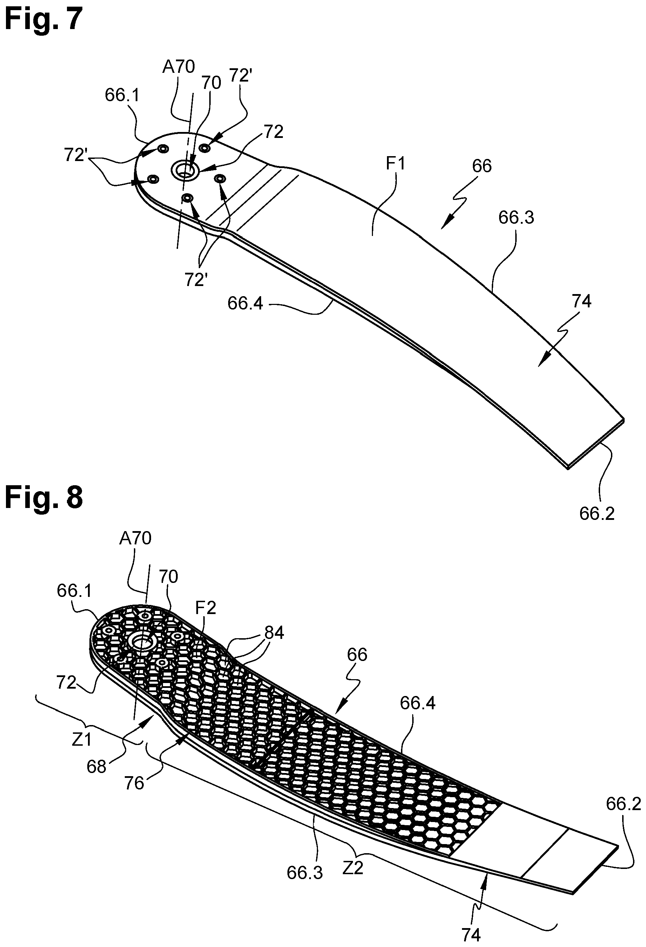

Comme illustré sur les figures 7 à 9 et 14, chaque porte 62 se présente sous la forme d'une lame 66 qui présente une première extrémité 66.1 reliée par l'articulation 64 au support, une deuxième extrémité 66.2 dite libre ainsi que deux bords latéraux 66.3, 66.4 reliant les première et deuxième extrémités 66.1, 66.2.

Chaque lame 66 présente des première et deuxième faces qui correspondent aux première et deuxième faces F1, F2 de la porte 62 et sont reliées par un chant C. Ce dernier forme le contour de la lame 66 et comprend une portion en demi-cercle au niveau de la première extrémité 66.1, une portion sensiblement rectiligne au niveau de la deuxième extrémité 66.2 ainsi que des portions sensiblement rectilignes au niveau des bords latéraux 66.3, 66.4. Bien entendu, l'invention n'est pas limitée à cette géométrie pour la lame 66.

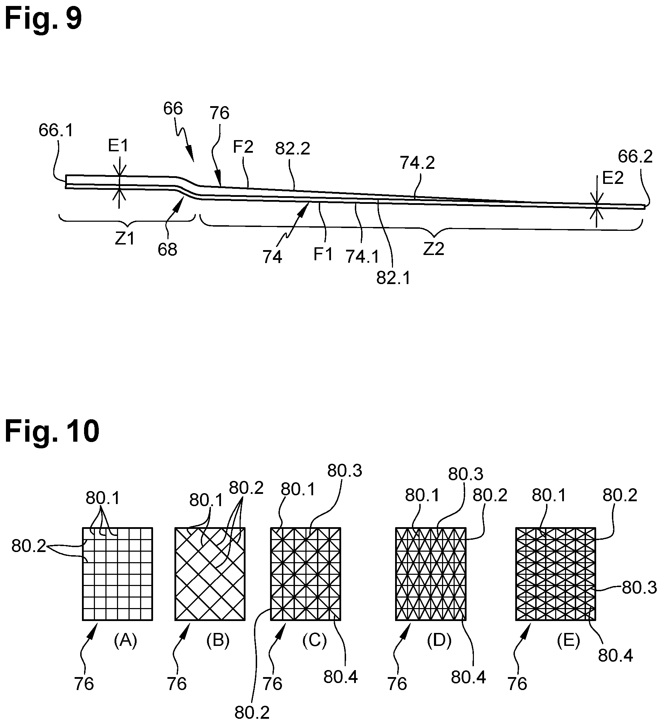

Les première et deuxième faces F1, F2 de la porte 62 ou de la lame 66 peuvent être sensiblement planes. En variante, comme illustré sur la figure 9 par exemple, les première et deuxième faces F1, F2 comprennent une première zone Z1 plane au niveau de la première extrémité 66.1, un décrochement 68 puis une deuxième zone Z2 sensiblement plane ou légèrement courbe entre le décrochement 68 et la deuxième extrémité 66.2. Selon une configuration, un décrochement 68 comprend deux plis successifs, parallèles entre eux et faiblement espacés. Bien entendu, l'invention n'est pas limitée à ce profil pour la lame 66.

Chaque lame 66 présente une première épaisseur E1 au niveau de la première extrémité 66.1 et une deuxième épaisseur E2, inférieure à la première épaisseur E1, au niveau de la deuxième extrémité 66.2. Selon une configuration, la première zone Z1 présente une épaisseur constante égale à la première épaisseur E1. En complément, la deuxième zone Z2 présente une épaisseur qui diminue progressivement de la première épaisseur E1 au niveau du décrochement 68 jusqu'à la deuxième épaisseur E2 au niveau de la deuxième extrémité 66.2. Ainsi, la lame 66 présente, au niveau de l'articulation 64 une épaisseur plus importante qu'au niveau de son extrémité libre, ce qui renforce ses caractéristiques mécaniques. Bien entendu, l'invention n'est pas limitée à cette configuration pour l'épaisseur de la lame 66.

Selon un mode de réalisation, la porte 62 présente au moins un orifice traversant 70 débouchant au niveau des première et deuxième faces F1, F2 de la porte 62 (ou de la lame 66), qui présente un axe A70 sensiblement perpendiculaire à au moins une des première et deuxième faces F1, F2, est positionné à proximité de la première extrémité 66.1 et configuré pour loger un arbre formant l'axe de pivotement A62.

Selon une configuration, la porte 62 comprend au moins un insert 72 métallique tubulaire délimitant l'orifice traversant 70. Selon un agencement, cet insert 72 présente un corps tubulaire 72.1 et au moins une collerette 72.2 prévue à au moins une extrémité du corps tubulaire 72.1.

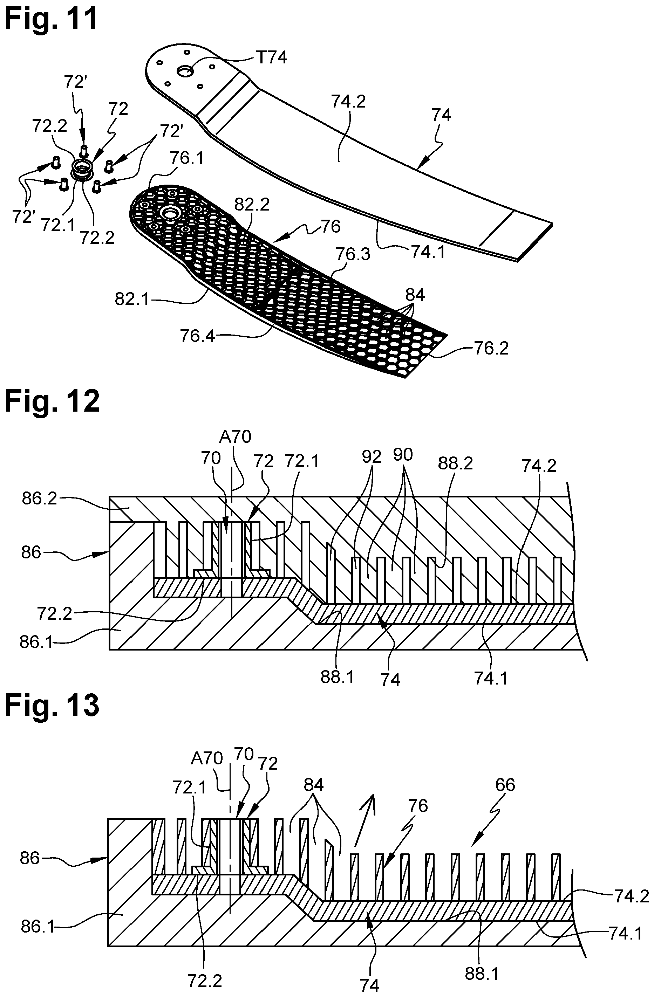

Comme illustré sur les figures 7 et 11, la lame 66 comprend plusieurs inserts 72, 72', un insert principal 72 formant l'orifice traversant 70 et plusieurs inserts secondaires 72' prévus autour de l'insert principal 72 et configurés par exemple pour permettre le vissage de vis.

Bien entendu, l'invention n'est pas limitée à ce mode de réalisation pour le ou les inserts 72, 72'.

La lame 66 comprend :
- au moins une première paroi 74 en matériau composite qui comporte des fibres longues noyées dans une matrice de résine thermoplastique, ladite première paroi 74 présentant des première et deuxième faces 74.1, 74.2, la première face 74.1 formant la première ou deuxième face F1, F2 de la lame 66,
- un réseau de nervures 76 en matériau composite positionné sur la deuxième face 74.2 de la première paroi 74.

Selon un premier mode de réalisation visible sur les figures 7 à 11, la lame 66 comprend une unique première paroi 74.

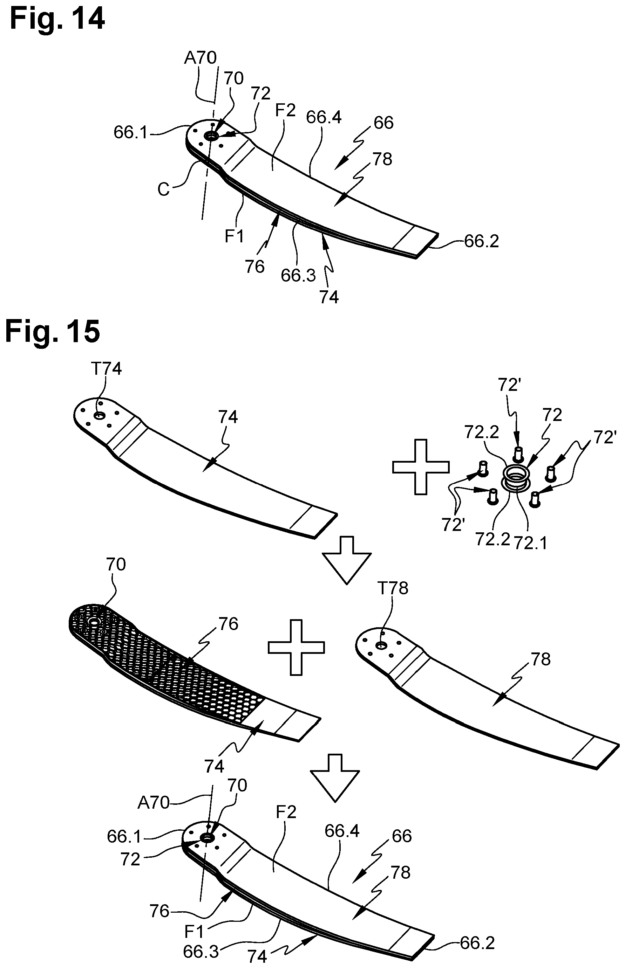

Selon un deuxième mode de réalisation visible sur les figures 14 et 15, la lame 66 comprend une première paroi 74 ainsi qu'une deuxième paroi 78 en matériau composite, le réseau de nervures 76 étant intercalé entre les première et deuxième parois 74 et 78.

Selon une configuration, la deuxième paroi 78 comprend des fibres longues noyées dans une matrice de résine thermoplastique.

Différents matériaux peuvent être utilisés pour les fibres longues des première et deuxième parois 74, 78 qui peuvent être en carbone ou en verre par exemple ainsi que pour la résine thermoplastique qui peut être une résine polyamide ou polyétheréthercétone (PEEK) par exemple. Bien entendu, l'invention n'est pas limitée à ces matières pour les fibres ou la résine thermoplastique.

Les fibres longues de la première ou deuxième paroi 74, 78 sont orientées et agencées en fonction des caractéristiques mécaniques souhaitées pour la première ou deuxième paroi 74, 78.

Sur le plan géométrique, la première paroi 74 présente un contour identique à celui de la lame 66 à obtenir. La première paroi 74 peut présenter une épaisseur sensiblement constante, égale à la deuxième épaisseur E2 de la lame 66.

La deuxième paroi 78 peut avoir une épaisseur sensiblement constante et présenter un contour différent de celui de la lame 66 à obtenir et ne recouvrir que le réseau de nervures 76.

Chacune des première et deuxième parois 74, 78 présente un orifice traversant T74, T78 correspondant à l'orifice traversant 70 de la lame 66.

Selon un mode opératoire, les première et deuxième parois 74, 78 sont obtenues à partir d'un empilage de plis de fibres pré-imprégnées ou non. Elles peuvent être obtenues par une technique de moulage par transfert de résine dit RTM. Le drapage des plis de fibres peut être réalisé sur une surface plane puis, une fois consolidées, les première et deuxième parois peuvent être thermoformées. D'autres techniques sont envisageables pour réaliser les première et deuxième parois 74, 78.

Selon une caractéristique de l'invention, le réseau de nervures 76 est obtenu par surmoulage d'une résine sur la deuxième face 74.2 de la première paroi 74.

Selon un mode de réalisation, la résine du réseau de nervures 76 est une résine thermoplastique. Selon une configuration, la même résine thermoplastique est utilisée pour la première paroi 74 et le réseau de nervures 76.

Selon un mode de réalisation, la résine du réseau de nervures 76 comprend au moins une charge comme des fibres courtes. En variante, la résine du réseau de nervures 76 peut comprendre un mélange de différentes charges comme des fibres courtes, des fibres longues ou autres. Ces fibres peuvent être réalisées dans le même matériau que les fibres longues de la première paroi 74.

Le réseau de nervures 76 peut présenter différentes configurations en fonction des propriétés mécaniques recherchées pour la lame 66. Comme illustré sur la figure 10, différents agencements sont envisageables.

Selon un premier agencement (A), le réseau de nervures 76 comprend deux séries de nervures 80.1, 80.2, les nervures 80.1 de la première série étant perpendiculaires aux nervures 80.2 de la deuxième série et parallèles aux bords latéraux 66.3, 66.4 de la lame 66.

Selon un deuxième agencement (B), le réseau de nervures 76 comprend deux séries de nervures 80.1, 80.2, les nervures 80.1 de la première série étant perpendiculaires aux nervures 80.2 de la deuxième série et formant un angle d'environ 45° avec les bords latéraux 66.3, 66.4 de la lame 66.

Selon un troisième agencement (C), le réseau de nervures comprend quatre séries de nervures, les nervures 80.1 de la première série étant parallèles aux bords latéraux 66.3, 66.4 de la lame 66, les nervures 80.2 de la deuxième série étant perpendiculaires aux nervures 80.1 de la première série, les nervures 80.3 de la troisième série formant un angle de +45° avec les nervures 80.1 de la première série, les nervures 80.4 de la quatrième série formant un angle de -45° avec les nervures 80.1 de la première série.

Selon un quatrième agencement (D), le réseau de nervures comprend quatre séries de nervures, les nervures 80.1 de la première série étant parallèles aux bords latéraux 66.3, 66.4 de la lame 66, les nervures 80.2 de la deuxième série étant perpendiculaires aux nervures 80.1 de la première série, les nervures 80.3 de la troisième série formant un angle d'environ +60° avec les nervures 80.1 de la première série, les nervures 80.4 de la quatrième série formant un angle d'environ -60° avec les nervures 80.1 de la première série.

Selon un cinquième agencement (E), le réseau de nervures comprend trois séries de nervures, les nervures 80.1 de la première série étant parallèles aux bords latéraux 66.3, 66.4 de la lame 66, les nervures 80.2 de la deuxième série formant un angle de +60° avec les nervures 80.1 de la première série, les nervures 80.3 de la troisième série formant un angle de -60° avec les nervures 80.1 de la première série.

Bien entendu, l'invention n'est pas limitée aux agencements visibles sur la figure 10 pour le réseau de nervures 76.

Comme illustré sur la figure 8, le réseau de nervures 76 comprend des première et deuxième extrémités 76.1, 76.2 ainsi que deux bords latéraux 76.3, 76.4 reliant les première et deuxième extrémités 76.1, 76.2. Le réseau de nervures 76 présente un contour qui comprend une portion en demi-cercle au niveau de la première extrémité 76.1 identique à celle de la première extrémité 66.1 de la lame 66, une portion rectiligne au niveau de la deuxième extrémité 76.2 ainsi que des portions sensiblement rectilignes au niveau des bords latéraux 76.3, 76.4 identiques aux bords latéraux 66.3, 66.4 de la lame 66.

Selon une configuration, le réseau de nervures 76 présente une longueur (distance entre ses première et deuxième extrémités 76.1, 76.2) inférieure à la longueur de la lame 66 (distance séparant les première et deuxième extrémités 66.1, 66.2 de la lame 66). Selon cette configuration, la première extrémité 76.1 du réseau de nervures 76 est positionnée à l'aplomb de la première extrémité 66.1 de la lame 66, la deuxième extrémité 76.2 étant décalée par rapport à la deuxième extrémité 66.2 de la lame 66 en direction de la première extrémité 76.1, comme illustré sur la figure 8. Ainsi, le réseau de nervures 76 dégage une partie de la deuxième face 74.2 de la première paroi 74 située au niveau de la deuxième extrémité 66.2 de la lame 66 opposée à la première extrémité 66.1 au niveau de laquelle est positionné l'orifice traversant 70.

Le réseau de nervures 76 présente une épaisseur constante sur une zone correspondant à la première zone Z1 de la lame 66 puis une épaisseur qui diminue progressivement en s'éloignant de l'orifice traversant 70 jusqu'à sa deuxième extrémité 76.2. A titre indicatif, le réseau de nervures 76 présente une épaisseur de l'ordre de 5 mm qui diminue jusqu'à une épaisseur de l'ordre de 1 mm au niveau de la deuxième extrémité 76.2.

Quel que soit le mode de réalisation, le réseau de nervures 76 comprend une première face 82.1 en contact avec la deuxième face 74.2 de la première paroi 74 et une deuxième face 82.2, opposée à la première face 82.1, formant la deuxième face de la lame 66 ou en contact avec la deuxième paroi 78. Le réseau de nervures 76 définit entre les nervures des cellules 84 débouchant au niveau des première et deuxième faces 82.1, 82.2. Selon les variantes, ces cellules 84 peuvent être hexagonales comme illustré sur la figure 8, carrées et/ou triangulaires comme illustré sur la figure 10.

Selon un mode de réalisation, le réseau de nervures 76 est configuré en fonction des caractéristiques mécaniques souhaitées mais également en fonction du traitement acoustique souhaité. Selon ce mode de réalisation, la lame 66 comprend des première et deuxième parois 74, 78, l'une des deux parois, notamment la première paroi 74, étant poreuse et laissant passer au moins certaines ondes acoustiques, l'autre paroi, notamment la deuxième paroi 78, étant imperméable aux ondes acoustiques. Les cellules 84 du réseau de nervures 76 sont dimensionnées en fonction des propriétés acoustiques recherchées.

Selon un mode opératoire, le procédé de fabrication d'une porte 62 comprend une étape d'obtention de la première paroi 74 en au moins un matériau composite comportant des fibres longues noyées dans une matrice de résine thermoplastique puis une étape de surmoulage du réseau de nervures 76 sur l'une des faces de la première paroi 74 en injectant au moins une résine.

Avant l'étape de surmoulage, le procédé de fabrication d'une porte 62 peut comprendre une étape de thermoformage visant à mettre en forme la première paroi 74, notamment si cette dernière est plate à l'issue de l'étape d'obtention. Lors de l'étape de conformage, la première paroi 74 est chauffée et positionnée entre deux plaques conformées selon le profil désiré pour la première paroi 74. Le procédé de fabrication d'une porte 62 peut comprendre une étape de réalisation d'au moins un orifice T74 traversant la première paroi 74, par perçage par exemple, et/ou une étape de détourage visant à usiner le contour de la première paroi 74. Préalablement à l'étape de surmoulage, le procédé de fabrication d'une porte 62 comprend une étape de mise en place d'au moins un insert 72, 72'.

Selon une configuration, chaque insert 72, 72' est relié à la première paroi 74 et/ou au réseau de nervures 76 par collage ou grâce à la résine du réseau de nervures 76. Selon un mode de réalisation, chaque insert 72, 72' est inséré dans le réseau de nervures 76 et relié à au moins une des première et deuxième parois 74, 78 grâce au réseau de nervures 76.

Lors de l'étape de surmoulage, la première paroi 74 est positionnée dans un moule 86 qui présente une première surface de contact 88.1 contre laquelle est plaquée la première face de la première paroi 74 et une deuxième surface de contact 88.2 espacée de la deuxième face 74.2 de la première paroi 74 et conformée comme la deuxième face 82.2 du réseau de nervures 76 à obtenir.

Selon une configuration, le moule 86 comprend une première partie 86.1 qui présente la première surface de contact 88.1 ainsi qu'une deuxième partie 86.2 qui présente la deuxième surface de contact 88.2.

Le moule 86 est configuré pour occuper un état ouvert pour permettre la mise en place de la première paroi 74, du (ou des) insert(s) 72, 72' ou pour permettre de démouler la première paroi 74 pourvue du réseau de nervures 76 surmoulé ainsi qu'un état fermé pour réaliser l'étape de surmoulage. A l'état fermé, les première et deuxième parties 86.1, 86.2 du moule 86 sont en contact l'une avec l'autre de manière à obtenir une enceinte étanche dans laquelle sont positionnés la première paroi 74 et les inserts 72, 72'. Le moule 86 est configuré pour maintenir immobile(s) le (ou les) insert(s) 72, 72' en contact contre la deuxième face 74.2 de la première paroi 74.

Le moule 86 comprend pour chaque cellule 84, une empreinte 90 en saillie par rapport à la deuxième surface de contact 88.2 et configurée pour venir en contact avec la première paroi 74 lors de l'injection de la résine lorsque le moule 86 est à l'état fermé. Ainsi, la deuxième surface de contact 88.2, les empreintes 90 et la première paroi 74 délimitent au moins une cavité 92 correspondant au réseau de nervures 76, comme illustré sur la figure 12.

Lors de l'opération de surmoulage, la résine est injectée dans la (ou les) cavité(s) 92 de manière à obtenir par surmoulage le réseau de nervures 76. La résine est injectée de manière à combler totalement la (ou les) cavité(s) 92. Le moule 86 comprend un ou plusieurs points d'injection de résine positionnés de manière adéquate pour garantir un remplissage optimal de la (ou des) cavité(s) 92. La première paroi 74, les inserts 72 et/ou le moule 86 sont préchauffés ou chauffés pour favoriser l'injection de la résine entre les empreintes 90 et l'adhérence du réseau de nervures 76 sur la première paroi 74.

Après l'étape de surmoulage, le procédé de fabrication d'une porte 62 comprend une étape de démoulage, comme illustré sur la figure 13.

A l'issue de l'étape de surmoulage, le procédé de fabrication d'une porte 62 peut comprendre une étape de découpe de la lame 66 à la longueur souhaitée. A cet effet, la zone de la première paroi 74 non recouverte par le réseau de nervures 76 est découpée en fonction de la longueur souhaitée pour la lame 66.

Un procédé de fabrication d'une porte 62 comportant des première et deuxième parois 74, 78 comprend, en plus des étapes précédemment décrites, une étape d'obtention de la deuxième paroi 78 puis une étape de fixation de la deuxième paroi 78 contre le réseau de nervures 76 et éventuellement la première paroi 74, comme illustré sur la figure 15. Selon un mode opératoire, la deuxième paroi 78 est reliée au réseau de nervures 76 et à la première paroi 74 par collage. Selon un autre mode opératoire, lors de l'étape de fixation de la deuxième paroi 78, au moins la deuxième paroi 78 et le réseau de nervures 76 sont chauffés et la deuxième paroi 78 est plaquée contre au moins le réseau de nervures 76. A cet effet, les première et deuxième parois 74, 78 ainsi que le réseau de nervures 76 sont chauffés et positionnés entre deux plaques conformées comme les première et deuxième faces Z1, Z2 de la lame 66 à obtenir.

L'étape de découpe de la lame 66 à la longueur souhaitée peut être réalisée avant ou après l'étape d'assemblage de la deuxième paroi 78.

Le procédé de fabrication selon l'invention permet de fabriquer une porte d'un système d'inversion de poussée de manière simple et économique tout en limitant les déchets. Contrairement aux portes en matériau composite de l'art antérieur, le procédé de fabrication de l'invention permet d'obtenir l'orifice traversant nécessaire pour l'articulation de la porte lors de la fabrication de la lame 66.

Le fait d'utiliser une résine thermoplastique pour la première ou deuxième paroi 74, 78 permet d'obtenir une adhérence du réseau de nervures 76 renforcée en réactivant (en chauffant) la résine thermoplastique.

Enfin, il est possible de moduler les caractéristiques mécaniques de la lame 66 en fonction de la configuration du réseau de nervures 76.

## Revendications

1. Procédé de fabrication d'une porte (62) d'un système d'inversion de poussée (60) d'un aéronef, ladite porte (62) comprenant :
- au moins une première paroi (74) comportant une première face (74.1) configurée pour être en contact avec un flux d'air (58) à dévier et une deuxième face (74.2),
- un réseau de nervures (76) positionné sur la deuxième face (74.2) de la première paroi (74), comportant une première face (82.1) en contact avec la première paroi (74), une deuxième face (82.2) opposée à la première face (82.1) ainsi que des cellules (84) délimitées par les nervures du réseau de nervures (76) et débouchant au niveau des première et deuxième faces (82.1, 82.2),
le procédé de fabrication comprenant une étape d'obtention de la première paroi (74) réalisée en au moins un matériau composite comportant des fibres longues noyées dans une matrice de résine thermoplastique et une étape de surmoulage du réseau de nervures (76) sur la deuxième face (74.2) de la première paroi (74) en injectant au moins une résine, **caractérisé en ce que** la première paroi (74) est positionnée dans un moule (86) comportant une première surface de contact (88.1) contre laquelle est plaquée la première face (74.1) de la première paroi (74) ainsi qu'une deuxième surface de contact (88.2) espacée de la deuxième face (74.2) de la première paroi (74) et conformée comme la deuxième face (82.2) du réseau de nervures (76) à obtenir, le moule (86) comportant, pour chaque cellule (84), une empreinte (90) en saillie par rapport à la deuxième surface de contact (88.2) et configurée pour venir en contact avec la première paroi (74) lors de l'injection de résine.

2. Procédé de fabrication selon la revendication 1, **caractérisé en ce que** la première paroi (74) et/ou le moule (86) sont préchauffés ou chauffés pour favoriser l'injection de résine entre les empreintes (90) et l'adhérence du réseau de nervures (76) sur la première paroi (74).

3. Procédé de fabrication selon la revendication 1 ou 2, **caractérisé en ce qu'**il comprend une étape de mise en place d'au moins un insert (72, 72') dans le moule (86) préalablement à l'étape de surmoulage, le moule (86) étant configuré pour maintenir immobile(s) le (ou les) insert(s) (72, 72').

4. Procédé de fabrication selon l'une des revendications précédentes, **caractérisé en ce que** le procédé de fabrication comprend une étape de thermoformage de la première paroi (74) avant l'étape de surmoulage.

5. Procédé de fabrication selon l'une des revendications précédentes, **caractérisé en ce que** le procédé de fabrication comprend une étape de réalisation d'au moins un orifice (T74) traversant la première paroi (74) préalablement à l'étape de surmoulage.

6. Procédé de fabrication selon l'une des revendications précédentes, **caractérisé en ce que** le procédé de fabrication comprend une étape d'obtention d'une deuxième paroi (78) puis une étape de fixation de la deuxième paroi (78) contre le réseau de nervures (76) et éventuellement la première paroi (74).

7. Procédé de fabrication selon la revendication précédente, **caractérisé en ce que** la deuxième paroi (78) est en matériau composite comportant des fibres longues noyées dans une matrice de résine thermoplastique et **en ce que** lors de l'étape de fixation de la deuxième paroi (78), au moins la deuxième paroi (78) et le réseau de nervures (76) sont chauffés et la deuxième paroi (78) est plaquée contre au moins le réseau de nervures (76).

8. Procédé de fabrication selon l'une des revendications précédentes, **caractérisé en ce que** la résine du réseau de nervures (76) est une résine thermoplastique et comprend au moins une charge.

9. Procédé de fabrication selon l'une des revendications précédentes, **caractérisé en ce que** le réseau de nervures (76) dégage une partie de la deuxième face (74.2) de la première paroi (74) et **en ce que** le procédé comprend une étape de découpe d'une zone de la première paroi (74) non recouverte par le réseau de nervures (76) en fonction d'une longueur souhaitée pour la porte.

10. Porte de système d'inversion de poussée obtenue à partir du procédé de fabrication selon l'une des revendications précédentes.

11. Porte de système d'inversion de poussée selon la revendication précédente, **caractérisée en ce que** la porte (62) comprend au moins un orifice traversant (70) qui présente un axe (A70) sensiblement perpendiculaire à au moins une des première et deuxième faces (F1, F2) de la porte (62).

12. Porte de système d'inversion de poussée selon la revendication précédente, **caractérisée en ce que** le réseau de nervures (76) dégage une partie de la deuxième face (74.2) de la première paroi (74) située au niveau d'une deuxième extrémité (66.2) distante de l'orifice traversant (70).

13. Porte de système d'inversion de poussée selon l'une des revendications 10 à 12, **caractérisée en ce que** la porte (62) comprend des première et deuxième parois (74, 78), **en ce que** le réseau de nervures (76) comprend une première face (82.1) en contact avec la première paroi (74), une deuxième face (82.2) opposée à la première face (82.1) et en contact avec la deuxième paroi (78) ainsi que des cellules (84) délimitées par les nervures du réseau de nervures (76) et débouchant au niveau des première et deuxième faces (82.1, 82.2) et **en ce que** la première paroi (74) est poreuse et laisse passer au moins certaines ondes acoustiques, la deuxième paroi (78) est imperméable aux ondes acoustiques et les cellules (84) du réseau de nervures (76) sont dimensionnées en fonction des propriétés acoustiques recherchées.

14. Ensemble de propulsion acoustique comprenant au moins un système d'inversion de poussée qui comporte plusieurs portes selon l'une des revendications 10 à 13.

## Patentansprüche

1. Herstellungsverfahren für eine Klappe (62) eines Schubumkehrsystems (60) eines Luftfahrzeugs, wobei die besagte Klappe (62) umfasst:
- wenigstens eine erste Wand (74) mit einer ersten Fläche (74.1), die dazu ausgebildet ist, mit einem umzuleitenden Luftstrom (58) in Kontakt zu stehen, und einer zweiten Fläche (74.2),
- ein Rippennetz (76), das auf der zweiten Fläche (74.2) der ersten Wand (74) angeordnet ist und eine erste Fläche (82.1), die mit der ersten Wand (74) in Kontakt steht, eine zweite Fläche (82.2), die der ersten Fläche (82.1) gegenüberliegt, sowie Zellen (84) aufweist, die durch die Rippen des Rippennetzes (76) begrenzt sind und im Bereich der ersten und zweiten Fläche (82.1, 82.2) münden,
wobei das Herstellungsverfahren einen Schritt des Bereitstellens der ersten Wand (74), die aus wenigstens einem Verbundwerkstoff mit in einer thermoplastischen Harzmatrix eingebetteten Langfasern hergestellt ist, und einen Umspritzungsschritt des Rippennetzes (76) auf der zweiten Fläche (74.2) der ersten Wand (74) durch Einspritzen wenigstens eines Harzes umfasst, **dadurch gekennzeichnet, dass** die erste Wand (74) in einem Formwerkzeug (86) positioniert wird, das eine erste Kontaktfläche (88.1), an die die erste Fläche (74.1) der ersten Wand (74) angelegt wird, sowie eine zweite Kontaktfläche (88.2) aufweist, die von der zweiten Fläche (74.2) der ersten Wand (74) beabstandet und wie die zu erhaltende zweite Fläche (82.2) des Rippennetzes (76) ausgestaltet ist, wobei das Formwerkzeug (86) für jede Zelle (84) einen Abdruck (90) aufweist, der in Bezug auf die zweite Kontaktfläche (88.2) vorsteht und dazu ausgebildet ist, beim Einspritzen des Harzes mit der ersten Wand (74) in Kontakt zu kommen.

2. Herstellungsverfahren nach Anspruch 1, **dadurch gekennzeichnet, dass** die erste Wand (74) und/oder das Formwerkzeug (86) vorgewärmt oder erwärmt werden, um das Einspritzen des Harzes zwischen den Abdrücken (90) und die Haftung des Rippennetzes (76) an der ersten Wand (74) zu fördern.

3. Herstellungsverfahren nach Anspruch 1 oder 2, **dadurch gekennzeichnet, dass** es vor dem Umspritzungsschritt einen Schritt des Einsetzens wenigstens eines Einlegeteils (72, 72') in das Formwerkzeug (86) umfasst, wobei das Formwerkzeug (86) dazu ausgebildet ist, das Einlegeteil (die Einlegeteile) (72, 72') unbeweglich zu halten.

4. Herstellungsverfahren nach einem der vorhergehenden Ansprüche, **dadurch gekennzeichnet, dass** das Herstellungsverfahren vor dem Umspritzungsschritt einen Thermoformschritt der ersten Wand (74) umfasst.

5. Herstellungsverfahren nach einem der vorhergehenden Ansprüche, **dadurch gekennzeichnet, dass** das Herstellungsverfahren vor dem Umspritzungsschritt einen Schritt des Herstellens wenigstens einer die erste Wand (74) durchdringenden Öffnung (T74) umfasst.

6. Herstellungsverfahren nach einem der vorhergehenden Ansprüche, **dadurch gekennzeichnet, dass** das Herstellungsverfahren einen Schritt des Bereitstellens einer zweiten Wand (78) und anschließend einen Schritt des Befestigens der zweiten Wand (78) an dem Rippennetz (76) und gegebenenfalls an der ersten Wand (74) umfasst.

7. Herstellungsverfahren nach dem vorhergehenden Anspruch, **dadurch gekennzeichnet, dass** die zweite Wand (78) aus einem Verbundwerkstoff mit in einer thermoplastischen Harzmatrix eingebetteten Langfasern besteht und dass bei dem Schritt des Befestigens der zweiten Wand (78) wenigstens die zweite Wand (78) und das Rippennetz (76) erwärmt werden und die zweite Wand (78) an wenigstens das Rippennetz (76) angelegt wird.

8. Herstellungsverfahren nach einem der vorhergehenden Ansprüche, **dadurch gekennzeichnet, dass** das Harz des Rippennetzes (76) ein thermoplastisches Harz ist und wenigstens einen Füllstoff umfasst.

9. Herstellungsverfahren nach einem der vorhergehenden Ansprüche, **dadurch gekennzeichnet, dass** das Rippennetz (76) einen Teil der zweiten Fläche (74.2) der ersten Wand (74) freilässt und dass das Verfahren einen Schritt des Zuschneidens eines nicht vom Rippennetz (76) bedeckten Bereichs der ersten Wand (74) in Abhängigkeit von einer gewünschten Länge für die Klappe umfasst.

10. Klappe eines Schubumkehrsystems, erhalten durch das Herstellungsverfahren nach einem der vorhergehenden Ansprüche.

11. Klappe eines Schubumkehrsystems nach dem vorhergehenden Anspruch, **dadurch gekennzeichnet, dass** die Klappe (62) wenigstens eine durchgehende Öffnung (70) umfasst, die eine Achse (A70) aufweist, die im Wesentlichen im rechten Winkel zu wenigstens einer der ersten und zweiten Flächen (F1, F2) der Klappe (62) ist.

12. Klappe eines Schubumkehrsystems nach dem vorhergehenden Anspruch, **dadurch gekennzeichnet, dass** das Rippennetz (76) einen Teil der zweiten Fläche (74.2) der ersten Wand (74) freilässt, der sich im Bereich eines von der durchgehenden Öffnung (70) entfernten zweiten Endes (66.2) befindet.

13. Klappe eines Schubumkehrsystems nach einem der Ansprüche 10 bis 12, **dadurch gekennzeichnet, dass** die Klappe (62) eine erste und eine zweite Wand (74, 78) umfasst, dass das Rippennetz (76) eine erste Fläche (82.1), die mit der ersten Wand (74) in Kontakt steht, eine zweite Fläche (82.2), die der ersten Fläche (82.1) gegenüberliegt und mit der zweiten Wand (78) in Kontakt steht, sowie Zellen (84) aufweist, die durch die Rippen des Rippennetzes (76) begrenzt sind und im Bereich der ersten und zweiten Fläche (82.1, 82.2) münden, und dass die erste Wand (74) porös ist und zumindest bestimmte Schallwellen durchlässt, die zweite Wand (78) für Schallwellen undurchlässig ist und die Zellen (84) des Rippennetzes (76) in Abhängigkeit von den angestrebten akustischen Eigenschaften bemessen sind.

14. Akustische Antriebsanordnung, mit wenigstens einem Schubumkehrsystem, das mehrere Klappen nach einem der Ansprüche 10 bis 13 aufweist.

## Claims

1. Method for manufacturing a door (62) of a thrust reversal system (60) of an aircraft, said door (62) comprising:
- at least one first wall (74) comprising a first face (74.1) configured to be in contact with an airstream (58) to be deflected and a second face (74.2),
- a network of ribs (76) positioned on the second face (74.2) of the first wall (74), comprising a first face (82.1) in contact with the first wall (74), a second face (82.2) opposite the first face (82.1) and cells (84) delimited by the ribs of the network of ribs (76) and open on the first and second faces (82.1, 82.2),
the manufacturing method comprising a step of obtaining of the first wall (74) produced in at least one composite material comprising long fibers embedded in a thermoplastic resin matrix and a step of overmolding of the network of ribs (76) on the second face (74.2) of the first wall (74) by injecting at least one resin, **characterized in that** the first wall (74) is positioned in a mold (86) comprising a first contact surface (88.1) against which the first face (74.1) of the first wall (74) is pressed and a second contact surface (88.2) spaced apart from the second face (74.2) of the first wall (74) and shaped as the second face (82.2) of the network of ribs (76) to be obtained, the mold (86) comprising, for each cell (84), a die (90) protruding with respect to the second contact surface (88.2) and configured to come into contact with the first wall (74) upon the injection of resin.

2. Manufacturing method as claimed in claim 1, wherein the first wall (74) and/or the mold (86) are preheated or heated to promote the injection of resin between the dies (90) and the adhesion of the network of ribs (76) on the first wall (74).

3. Manufacturing method as claimed in claim 1 or 2, wherein it comprises a step of placement of at least one insert (72, 72') in the mold (86) prior to the overmolding step, the mold (86) being configured to keep the insert (or inserts) (72, 72') immobile.

4. Manufacturing method as claimed in one of the preceding claims, wherein the manufacturing method comprises a step of thermoforming of the first wall (74) before the overmolding step.

5. Manufacturing method as claimed in one of the preceding claims, wherein the manufacturing method comprises a step of production of at least one orifice (T74) passing through the first wall (74) prior to the overmolding step.

6. Manufacturing method as claimed in one of the preceding claims, wherein the manufacturing method comprises a step of obtaining of a second wall (78) then a step of fixing of the second wall (78) against the network of ribs (76) and possibly the first wall (74).

7. Manufacturing method as claimed in the preceding claim, wherein the second wall (78) is made of a composite material comprising long fibers embedded in a thermoplastic resin matrix and wherein, during the step of fixing of the second wall (78), at least the second wall (78) and the network of ribs (76) are heated and the second wall (78) is pressed against at least the network of ribs (76).

8. Manufacturing method as claimed in one of the preceding claims, wherein the resin of the network of ribs (76) is a thermoplastic resin and comprises at least one filler.

9. Manufacturing method as claimed in one of the preceding claims, wherein the network of ribs (76) clears a part of the second face (74.2) of the first wall (74) and wherein the method comprises a step of cutting of a zone of the first wall (74) not covered by the network of ribs (76) according to a desired length for the door.

10. Thrust reversal system door obtained from the manufacturing method as claimed in one of the preceding claims.

11. Thrust reversal system door as claimed in the preceding claim, wherein the door (62) comprises at least one through-orifice (70) which has an axis (A70) substantially at right angles to at least one of the first and second faces (F1, F2) of the door (62).

12. Thrust reversal system door as claimed in the preceding claim, wherein the network of ribs (76) clears a part of the second face (74.2) of the first wall (74) situated at a second end (66.2) distant from the through-orifice (70).

13. Thrust reversal system door as claimed in one of claims 10 to 12, wherein the door (62) comprises first and second walls (74, 78), wherein the network of ribs (76) comprises a first face (82.1) in contact with the first wall (74), a second face (82.2) opposite the first face (82.1) and in contact with the second wall (78) and cells (84) delimited by the ribs of the network of ribs (76) and open on the first and second faces (82.1, 82.2) and wherein the first wall (74) is porous and allows at least some acoustic waves to pass through, the second wall (78) is impermeable to the acoustic waves and the cells (84) of the network of ribs (76) are dimensioned according to the acoustic properties sought.

14. Aircraft propulsion assembly comprising at least one thrust reversal system which comprises several doors as claimed in one of claims 10 to 13.
